# EUROPEAN PATENT SPECIFICATION

(11) **EP 2 657 677 B1**
(45) Date of publication and mention of the grant of the patent: **12.02.2020**
(21) Application number: 12382155.5
(22) Date of filing: 23.04.2012
(51) Int. Cl.: G01N 3/08, G01N 1/04

(54) **Method and device for obtaining and testing properties of sand casting mold**
Methode und Verfahren zur Entnahme von Proben aus einer Gussform und Testen der Eigenschaften dieser Probe
Procédé et dispositif pour obtenir et analyser les propriétés du moule de sable

(43) Date of publication of application: 30.10.2013
(73) Proprietor: Casa Maristas Azterlan, 48200 Durango, Vizcaya (ES)
(72) Inventor: Izaga, Julian, 48200 DURANGO (Vizcaya) (ES)
(74) Representative: Stiebe, Lars Magnus

(56) References cited:
- US-A- 3 638 478
- US-A- 4 616 508
- US-A- 5 609 198

## Description

### Technical Field of the Invention

The present invention is encompassed in the technical field of test methods and equipment used for evaluating the mechanical properties in molds used for casting molten metals and, particularly, non-permanent sand molds, i.e., different types of molds which are used for a single casting only.

### Background of the Invention

Production of cast parts by means of "non-permanent mold", i.e., different types of sand molds which are only used for casting a metal, such as iron-, steel-, bronze-, aluminium-based materials, etc., for example, requires the implementation of four basic operations: preparing liquid metal, preparing the mold, casting and finishing the part.

In the preparation of liquid metal, the raw materials are heated together until reaching the liquid state. The metallurgical nature is adjusted under these conditions.

Casting is carried out according to the particularities of the part to be produced and the most suitable technological parameters (casting temperature, casting time, cooling method, etc.) are defined.

Finally, it is necessary to separate the casting and feeding system from the part when finishing the part which is performed after cooling the mold. The part is then cleaned and its final inspection is performed.

In the production of metal parts, foundry technology is determined by three keys having a different implication and significance, namely:
- Molding tool design (Design engineering). Concepts of the filling and feeding system, in addition to technological parameters.
- Characteristics of the liquid metal (Applied metallurgy). The metallurgical quality of the liquid metal is determined by the chemical composition, the use of conditioners and the methodology applied in preparing the liquid metal.
- Properties of the mold (Quality of the mold).

The mold is prepared using molding tools. The corresponding molds are prepared using to that end molding compounds of different natures. Sand molds are produced from molding mixtures comprising a sand (silica, synthetic sand, chromite, olivine, etc.) base, resins and catalysts (hardening agents) are incorporated. This mixture is commonly called a "molding compound". The molding compound acquires its form by means of using the molding tools corresponding to the part to be produced. The molds are formed by means of compaction, i.e., tamping the molding compound, and then curing. The characteristics of the mold are determined by several factors although the binding system and the degree of compaction (= tamping) are the determining factors.

Utterly rudimentary control systems and subjective interpretation systems, such as "measuring" the properties of a mold, for example, by evaluating the difficulty to introduce a nail into the mold itself have commonly been used to determine the mechanical properties of sand molds.

Several sampling and test systems and devices have been contrived for the purpose of improving the control of mechanical properties with respect to these rudimentary systems.

In this sense, patent application US2004104151 describes a device for sampling and testing molding sand which extracts the sample from the sand mixture at a given height on one side of the kneading machine. The sample is extracted by means of a worm screw. To prevent sample agglomeration, the device has several rods with which the sample contacts on its way to the mold where the sample is compacted in order to conduct the corresponding tests thereon. In turn, the mold has means which allow knowing the compactibility characteristics of the sample and aid in making decisions with respect to the mixture which is being kneaded. On the other hand, patent US5609198 describes a device for testing various variables of interest in mold manufacturing. The device has means to feed the sample into a mold, to weigh it and to compact it to then conduct various tests providing information on the mechanical properties, the permeability of a mixture with which a mold is to be manufactured. Decisions with respect to the mixture with which the mold is to be formed can be made with the results obtained. Finally, patent US3638478 describes an automatic sampling, preparation and testing of a sample of molding sand extracted from the kneading machine or the mixing mill. The results produced by the tests in terms of moisture content, compactibility, permeability, and mechanical strength are used for making decisions with respect to the sand mixture which will be used for mold production.

On the other hand, patent US4616508 discloses a method and apparatus for producing a test piece of molding compound useful in measuring the properties of the molding compound of which the test piece is made.

Although these systems and devices for controlling mechanical properties involve an improvement with respect to the "rudimentary" methods previously used in the art, their application in sands agglomerated by means of chemical systems is not possible, and even less in measuring the properties of the molds themselves.

### Description of the Invention

The object of the present invention is to overcome the drawbacks of the state of the art detailed above by means of a test method and equipment for evaluating the mechanical properties in sand molds.

The method according to the present invention is a process for evaluating the mechanical properties of sand molds which comprises:extracting at least one sample from a portion of an uncured sand mold made of a predetermined composition comprising a molding compound including a binding system to obtain an extracted real test piece;curing the extracted real test piece for a predetermined curing time to obtain a cured real test piece;conditioning the cured real test piece to predetermined dimensions including a predetermined height and a predetermined diameter to obtain a conditioned real test piece;subjecting the conditioned real test piece to a mechanical breaking strength test under predetermined pressure and temperature conditions to obtain real mechanical strength values;comparing the real mechanical strength values with reference mechanical strength values corresponding to at least one conditioned reference test piece also having substantially said predetermined dimensions, thus evaluating the mechanical properties of the conditioned real test piece, wherein said reference mechanical strength values are obtained as follows:compacting, applying predetermined compacting conditions, a reference composition comprising substantially the same molding compound and substantially the same binding system as the uncured sand mold to obtain a compacted reference test piece;curing the compacted reference test piece for a reference curing time to obtain a cured reference test piece;conditioning the cured reference test piece to said predetermined dimensions to obtain a conditioned reference test piece; and subjecting the conditioned reference test piece to a mechanical breaking strength test under said predetermined pressure and temperature conditions to obtain the reference mechanical strength values.

The predetermined diameter can be, for example, 50±5 mm and the predetermined height can be, for example, 50±5 mm, although other dimensions can also be used. An approximate diameter of 50 mm and a predetermined height of approximately 50 mm are considered very suitable for the purpose of the present invention.

On the other hand, the equipment according to the present invention is conceived for evaluating the mechanical properties of sand molds using the method according to the invention and comprises
at least one trepanning device designed for extracting the real sample from a portion of the sand mold and obtaining the extracted real test piece;
at least one calibrating device for conditioning at least the cured real test piece to the predetermined dimensions removing portions of the cured real test piece exceeding the predetermined dimensions;
at least one mechanical strength testing device comprising loading means for subjecting at least the conditioned real test piece to the mechanical breaking strength test, detection means for detecting the break of the conditioned real test piece subjected to the mechanical strength test;
collection means for collecting the real mechanical strength values including at least one value corresponding to a breaking value of the conditioned real test piece.

The reference strength values, particularly the breaking strength of the conditioned reference test pieces, make up a reference value corresponding to the maximum strength of the molding compound to be evaluated. However, this maximum strength is not necessarily obtained in real sand molds all the time due to, for example, their particular design. Therefore, the comparison of the mechanical strength values of the conditioned real test pieces which is performed according to the method of the present invention allows determining whether the maximum mechanical strength value inherent to a molding compound also translates into mechanical strength in the real mold. Therefore, the comparison of these mechanical strength values allows discovering weak and/or improvable aspects in real sand molds by means of a method which can be standardized and is free of subjective interpretations.

The conditioned reference test piece has been obtained by means of a first step in which the reference composition is compacted under the predetermined compacting conditions to obtain the compacted reference test piece; a second step in which the compacted reference test piece is subjected to curing for a reference curing time to obtain the cured reference test piece; and a third step in which the cured reference test piece is substantially conditioned to the predetermined dimensions to obtain the conditioned reference test piece.

The predetermined curing time to which the extracted real test piece has been subjected preferably has a duration substantially equal to the reference curing time to which the compacted reference composition has been subjected. The predetermined composition of the extracted real test piece is also preferably the same composition as the reference composition. The chosen curing time basically depends on the time required by the binding system used (furanic, (self-setting) phenolic urethane, alkaline phenolic, etc.). 24 hours can be used as a reference for the reference and predetermined curing time since it is frequently used as curing times for molds of this nature.

The mechanical breaking strength test to which the conditioned reference test piece and the conditioned real test piece are subjected can be selected, for example, from compression tests, flexural tests, tensile tests, and combinations thereof. The testing device must be capable of implementing the breaking force while at the same time measuring the maximum force applied. The mechanical breaking strength of the conditioned real or reference test piece can be expressed in terms of total force (kg) or force per unit of surface are (kg/cm²).

Preferably and for the purposes of the representative nature of the evaluation, the samples are extracted from those portions of the mold which are more interesting or critical. The decision as to the area of the mold to be tested depends on the type of part, its criticality, etc. and it is randomly chosen, although it is proposed that the areas of maximum interest for characterizing the properties of the mold through the evaluation method according to the present invention be defined from the design itself (design engineering). The comparison between the mechanical breaking strength values measured in the conditioned reference test pieces and in the conditioned real test pieces allows evaluating the potential of a molding compound and defining improvement opportunities, such as optimization or cost reduction strategies.

The extracted real test piece is preferably extracted from the sand mold using a trepanning device sized to obtain the extracted real test piece with a height greater than the predetermined height of the conditioned real test piece, and the cured real test piece is adjusted to the predetermined height to obtain the conditioned real test piece. The predetermined height of the cured real test piece can be adjusted using a calibrating device. The height of the cured reference test piece can be adjusted to the predetermined height using this or another calibrating device.

According to the invention, the reference composition can be compacted in a compacting device using a predetermined number of compaction blows (for example 3 blows) and at a predetermined tamping intensity.

In order to make the evaluation of the mechanical properties more reliable, a plurality of samples can be extracted from different portions of the sand mold, such that a plurality of extracted real test pieces is obtained. Once cured and conditioned, the conditioned test pieces can be compared in terms of their respective real strength values and/or in terms of the mean of their respective real strength values with the reference strength values of one or more conditioned reference test pieces.

In one embodiment of the equipment according to the invention, the trepanning device comprises a cylindrical rotating body comprising an inner cavity and a serrated edge surrounding an open base of the inner cavity. The inner cavity has a height greater than the predetermined height and a diameter substantially equal to the predetermined diameter established in the predetermined dimensions. The cylindrical rotating body is connected to an actuation device, such as an electric geared motor, for example, to confer rotational movement to the cylindrical rotating body.

The calibrating device can comprise a cylindrical chamber located in a container body with open opposite bases. The cylindrical chamber has a diameter and a height corresponding to the predetermined diameter and to the predetermined height established in the predetermined dimensions, respectively. A removal device, such as one or several blades or saws, for example, which are used to make the test piece level with the upper and lower open bases of the cylindrical chamber, is provided for removing test piece material protruding from the open bases of the cylindrical chamber.

The equipment can further comprise a compacting device for compacting the reference composition, comprising an inner cylindrical space located in a guiding body between a lower closed base and an upper open base and having a diameter substantially equal to the predetermined diameter and a height greater than the predetermined height established in the predetermined dimensions, as well as a thrusting piston which can move axially in the inner space towards said closed base for compacting the reference composition when it is housed in the inner space. Actuating means, such as a hydraulic or pneumatic actuator, or a screw device connected to the thrusting piston, for example, are provided to confer a predetermined axial thrust force to the thrusting piston in order to be able to subject the reference composition to at least one compaction blow.

As can be inferred from the foregoing, the present invention allows comparing the results of real mechanical strength tests corresponding to one or more samples originating from a real mold with the reference mechanical strength tests performed with reference samples made of a molding compound having the same or similar composition as the mold of the same mass and dimensions, in molds with identical characteristics. This allows comparing the real mechanical strength values both with the mechanical strength values obtained by means of testing the conditioned reference test pieces which have been prepared *in situ* and/or at the same time, and with mechanical strength values collected in a database based on the reference test pieces conditioned earlier and/or in another/other place/places.

The foregoing results in practical advantages such as being able to establish the breaking strength of sand molds prepared with different molding compounds while at the same time establishing the potential of a given molding system, acting on the process itself by optimizing the properties of sand mold or reducing production costs based on the evaluation results, and improving the stability of the mold and thereby optimizing the quality of cast parts.

### Brief Description of the Drawings

The aspects and embodiments of the invention are described below based on several schematic drawings, in which
Figure 1 is a block diagram showing an embodiment of the method according to the present invention;
Figure 2 is a side cross-section view of an embodiment of the trepanning device forming part of the equipment according to the invention;
Figure 3 is a bottom plan view of the trepanning device shown in Figure 2;
Figure 4 is a side cross-section view of an embodiment of the calibrating device forming part of the equipment according to the invention, containing a cured real or reference test piece;
Figure 5 is a side cross-section view of the calibrating device shown in Figure 4 after the cured test piece has been conditioned to a predetermined height to obtain the conditioned test piece;
Figure 6 is a cross-section through line A-A shown in Figure 5;
Figure 7 is a side cross-section view of an embodiment of the compacting device forming part of an embodiment of the equipment according to the invention;
Figure 8 is a side cross-section view of an embodiment of the testing device forming part of an embodiment of the equipment according to the invention.

The following elements are identified by reference numbers in these drawings
- 1: sand mold
- 1': portion of mold
- 1a: extracted real test piece
- 1 b: cured real test piece
- 1c: conditioned real test piece
- 2: reference composition
- 2a: compacted reference test piece
- 2b: cured reference test piece
- 2c: conditioned reference test piece
- 3: trepanning device
- 3a: cylindrical rotating body
- 3b: inner cavity
- 3c: serrated edge
- 3d: open base
- 3e: actuation device
- 4: calibrating device
- 4a: cylindrical chamber
- 4b: container body
- 4c: open bases
- 4d, 4e: removal device
- 5: compacting device
- 5a: guiding body
- 5b: inner space
- 5c: lower closed base
- 5d: upper open base
- 5e: thrusting piston
- 5f: actuating means
- 5g: hydraulic fluid
- 6: mechanical strength testing device
- 6a, 6b: loading means
- 6c: work bench
- 7: collection means
- 8: detection means
- A: sample extraction step
- B: curing step
- C: conditioning step
- C_{Comp}: predetermined compacting conditions
- C_{P,T}: predetermined pressure and temperature conditions
- d: predetermined dimensions
- D: real mechanical strength testing step
- E: evaluation step
- F: first step
- G: second step
- H: third step
- I: fourth step
- t₁: predetermined curing time
- t₂: reference curing time
- V_{Real}: real mechanical strength values
- V_{Ref}: reference mechanical strength values

### Embodiments of the Invention

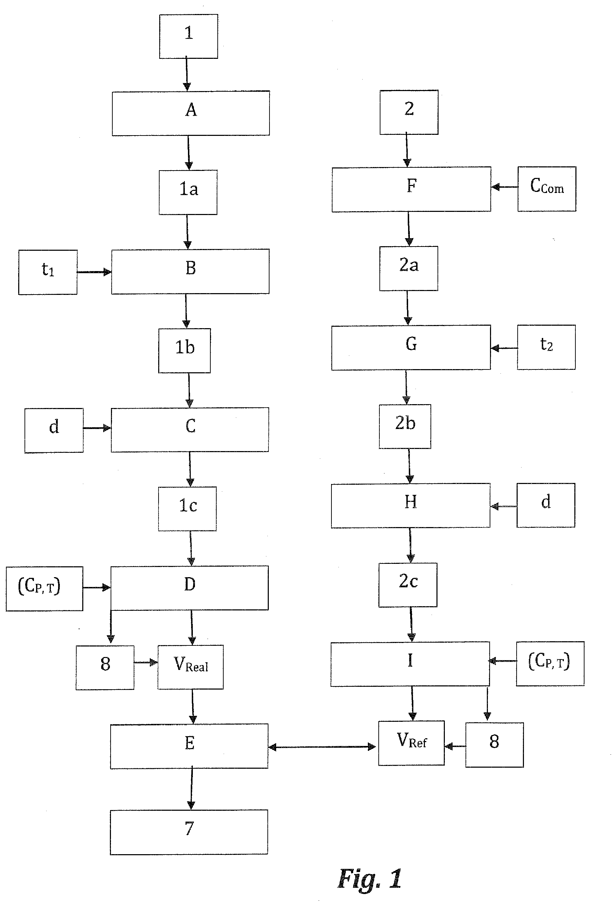

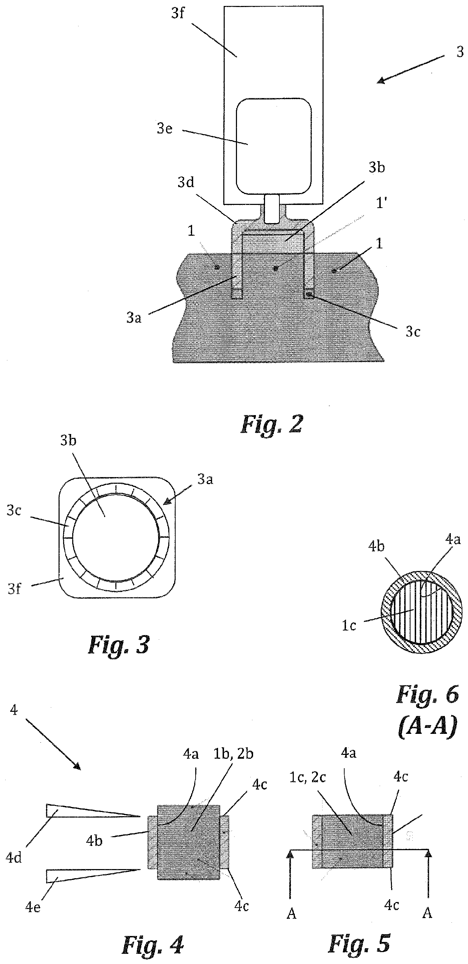

The embodiment of the method for evaluating the mechanical properties in sand molds shown in Figure 1 comprises an extraction step for extracting a sample from a portion of an uncured sand mold -1- to thus obtain an extracted real test piece - 1a-. The extraction is performed using a trepanning device -3- sized to obtain the extracted real test piece -1a- with a height greater than the predetermined height of the conditioned real test piece, and the cured real test piece -1b- is adjusted to the predetermined height to obtain the conditioned real test piece -1c-. An embodiment of the trepanning device -3- will be described below with reference to Figures 2 and 3. The predetermined diameter can be 50±5 mm, for example, and the predetermined height can be 50±5 mm, for example.

The extracted real test piece -1a- is subjected to a curing step -B- in which the extracted real test piece -1a- is subjected to curing for a predetermined curing time -t₁- to obtain a cured real test piece -1 b-, followed by a conditioning step -C- in which the cured real test piece -1b- is conditioned to predetermined dimensions -d- including a predetermined height and a predetermined diameter to obtain a conditioned real test piece -1c-.

Then a real mechanical strength testing step -D- is performed by subjecting the conditioned real test piece -1c- to a mechanical breaking strength test under the predetermined pressure and temperature conditions -C_{P,T}-.

The real mechanical strength values -V_{Real}- resulting from the mechanical strength test of the conditioned real test piece -1c- are collected and are compared in a subsequent evaluation step -E- with the reference mechanical strength values -V_{Ref}- corresponding to at least one conditioned reference test piece -2c-.

The conditioned reference test piece -2c- is obtained by means of a first step -F- in which a reference composition -2- is compacted under predetermined compacting conditions -C_{Comp}- to obtain a compacted reference test piece -2a-. The predetermined composition of the extracted real test piece -1- is the same composition as the reference composition -2a-. The reference composition -2a- can be compacted using a compacting device -5- using a predetermined number of compaction blows and at a predetermined tamping intensity.

In a second step -G- the compacted reference test piece -2a- is subjected to curing for a reference curing time -t₂- to obtain the cured reference test piece -2b-. The predetermined curing time -t₁- to which the extracted real test piece -1a- has been subjected has a duration substantially equal to the reference curing time -t₂- to which the compacted reference composition -2- has been subjected.

In a third step -H- the cured reference test piece -2b- is substantially conditioned to the predetermined dimensions -d- to obtain the conditioned reference test piece -2c-.

The reference mechanical strength values -V_{Ref}- of the conditioned reference test piece -1c- are then obtained in a fourth step -I- by means of a reference mechanical breaking strength test performed under the same pressure and temperature conditions -C_{P,T}- as the real strength test to which the conditioned real test piece -1c- is subjected. The reference mechanical strength values -V_{Ref}- are also collected, for example, in a folder of a database. The mechanical breaking strength testing to which the conditioned reference test piece -2c- and the conditioned real test piece -1c- are subjected can be selected from compaction tests, flexural tests, tensile tests, and combinations thereof.

The predetermined height of the cured real test piece -1b- can be adjusted using a calibrating device -4-. The height of the cured reference test piece -2b- can be adjusted to the predetermined height using this or another calibrating device -4-. An embodiment of a calibrating device -4- will be described below with reference to Figures 4 to 6.

In the embodiment shown in Figures 2 to 8, the equipment according to the present invention conceived for evaluating the mechanical properties of sand molds using the method according to the invention comprises a trepanning device -3-designed for extracting the real sample from a portion -1'- of the sand mold -1- and obtaining the extracted real test piece -1a-, a calibrating device -4- for conditioning at least the cured real test piece -1b- to the predetermined dimensions -d- by removing portions of the cured real test piece -1b- exceeding the predetermined dimensions -d-, a mechanical strength testing device -6- comprising loading means -6a, 6b- for subjecting at least the conditioned real test piece -1c- to the mechanical breaking strength test, detection means -8- for detecting the break of the conditioned real test piece -1c- subjected to the mechanical strength test, compacting device -5- for compacting the reference composition -2a-, as well as collection means -7- (see Figure 1) for collecting the real mechanical strength values -V_{Real}- including at least one value corresponding to a breaking value of the conditioned real test piece -1c-.

In the embodiment shown in Figures 2 and 3, the trepanning device -3-comprises a cylindrical rotating body -3a- comprising an inner cavity -3b- and a serrated edge -3c- surrounding an open base -3d- of the inner cavity-3b-. The inner cavity -3b- has a height greater than the predetermined height and a diameter substantially equal to the predetermined diameter established in the predetermined dimensions -d-. The cylindrical rotating body -3a- is connected to an actuation device - 3e-, such as an electric geared motor, for example, to confer rotational movement to the cylindrical rotating body -3a-. The geared motor -3e- is housed in a handle-3f-.

In the embodiment shown in Figures 4 to 6, the calibrating device -4- comprises a cylindrical chamber -4a- located in a container body -4b- with open opposite bases - 4c-. The cylindrical chamber -4a- has a diameter and a height corresponding to the predetermined diameter and to the predetermined height established in the predetermined dimensions -d-, respectively. A removal device -4d, 4e- comprising an upper blade -4e- and a lower blade -4f- which are used to make the cured test piece - 1b, 2b- level with the upper and lower open bases of the cylindrical chamber is provided for removing test piece material protruding from the open bases -4c- of the cylindrical chamber -4a-.

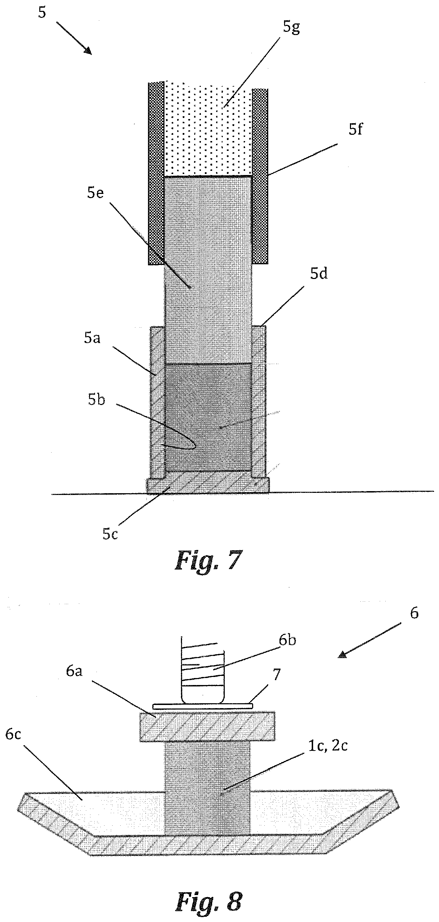

Figure 7 shows an embodiment of the compacting device -5- which can be used for compacting the reference composition -2a-, and which comprises an inner cylindrical space -5b- located in a guiding body -5a- between a lower closed base -5c- and an upper open base -5d- and having a diameter substantially equal to the predetermined diameter and a height greater than the predetermined height established in the predetermined dimensions -d-, as well as a thrusting piston -5e-which can move axially in the inner space -5b- towards said closed base -5c- for compacting the reference composition -2a- when it is housed in the inner space -5b-. A hydraulic actuator -5f- coupled such that the action of the hydraulic fluid -5g- of the actuator -5f- acts on the thrusting piston -5e- is provided to confer a predetermined axial thrust force to the thrusting piston -5e- in order to be able to subject the reference composition -2- to at least one compaction blow.

Finally, Figure 8 shows an embodiment of the mechanical strength testing device -6- with which a compression test of the conditioned test pieces -1c, 2c- can be performed. As can be seen, this mechanical strength testing device -6- comprises loading means (6a, 6b) including an upper plate (6a) on which a screw -6b- acts and a testing bench -6c-. To perform the compression test, the conditioned test piece -1c, 2c-is held between the upper plate -6a- and the testing bench -6c-. The upper plate -6a-exerts increasing pressure on the conditioned test piece -1c, 2c- depending on the controlled actuation of the screw -6c- until the moment when the pressure causes the conditioned test piece -1c, 2c- to break. The moment when the break occurs is detected by the detection means -8- which can comprise, for example, a pressure gauge detecting the change of pressure between the upper plate -6a- and the lower tip of the screw-6b- occurring at the conditioned test piece -1c, 2c- breaks.

## Claims

1. Method for evaluating the mechanical properties of sand molds which comprises:
extracting (A) at least one sample from a portion of an uncured sand mold (1) made of a predetermined composition comprising a molding compound including a binding system to obtain an extracted real test piece (1a);
curing (B) the extracted real test piece (1 a) for a predetermined curing time (t1) to obtain a cured real test piece (1 b);
conditioning (C) the cured real test piece (1b) to predetermined dimensions (d) including a predetermined height and a predetermined diameter to obtain a conditioned real test piece (1 c);
subjecting (D) the conditioned real test piece (1 c) to a mechanical breaking strength test under predetermined pressure and temperature conditions (C_{P,T}) to obtain real mechanical strength values (V_{Real});
comparing (E) the real mechanical strength values (V_{Real}) with reference mechanical strength values (V_{Ref}) corresponding to at least one conditioned reference test piece (2c) also having substantially said predetermined dimensions (d), thus evaluating the mechanical properties of the conditioned real test piece (1c), wherein said reference mechanical strength values (V_{Ref}) are obtained as follows:
compacting (F), applying predetermined compacting conditions (C_{Comp}), a reference composition (2) comprising substantially the same molding compound and substantially the same binding system as the uncured sand mold (1) to obtain a compacted reference test piece (2a);
curing (G) the compacted reference test piece (2a) for a reference curing time (t2) to obtain a cured reference test piece (2b);
conditioning (H) the cured reference test piece (2b) to said predetermined dimensions (d) to obtain a conditioned reference test piece (2c); and
subjecting (I) the conditioned reference test piece (2c) to a mechanical breaking strength test under said predetermined pressure and temperature conditions (C_{P,T}) to obtain the reference mechanical strength values (V_{Refl}).

2. Method according to claim 1, **characterized in that** the predetermined curing time (t1) to which the extracted real test piece (1 a) has been subjected has a duration substantially equal to the reference curing time (t2) to which the compacted reference composition (2) has been subjected.

3. Method according to either claim 1 or 2, **characterized in that** the predetermined composition of the extracted real test piece (1) is the same composition as the reference composition (2a).

4. Method according to any preceding claim, **characterized in that** the mechanical breaking strength testing to which the conditioned reference test piece (2c) and the conditioned real test piece (1 c) are subjected are selected from compression tests, flexural tests, tensile tests, and combinations thereof.

5. Method according to any of claims 1 to 4, **characterized in that** the extracted real test piece (1a) is extracted from the sand mold (1) using a trepanning device (3) sized to obtain the extracted real test piece (1a) with a height greater than the predetermined height of the conditioned real test piece, and **in that** the cured real test piece (1b) is adjusted to the predetermined height to obtain the conditioned real test piece (1 c).

6. Method according to any of claims 1 to 5, **characterized in that** the predetermined height of the cured real test piece (1 b) is adjusted using a calibrating device (4).

7. Method according to any of claims 1 to 6, **characterized in that** the reference composition (2a) is compacted in a compacting device (5) using a predetermined number of compaction blows and at a predetermined tamping intensity.

8. Method according to any of claims 1 to 7, **characterized in that** the height of the cured reference test piece (2b) is adjusted to the predetermined height using a calibrating device (4).

9. Method according to any of claims 1 to 8, **characterized in that** a plurality of extracted real test pieces (1a) is extracted from a plurality of portions (1') of the sand mold (1).

10. Method according to claim 9, **characterized in that** in the evaluation step (E), the real mechanical strength values (VReal) of each conditioned real test piece (1c) are compared with the reference mechanical strength values (VRef) of at least one conditioned reference test piece (2c).

11. Equipment for evaluating the mechanical properties of sand molds using the method according any one of the preceding claims, **characterized in that** it comprises
at least one trepanning device (3) designed for extracting the real sample from a portion (1') of the sand mold (1) and obtaining the extracted real test piece (1a);
at least one calibrating device (4) for conditioning at least the cured real test piece (1 b) to the predetermined dimensions (d) removing portions of the cured real test piece (1 b) exceeding the predetermined dimensions (d);
at least one mechanical strength testing device (6) comprising loading means (6a, 6b) for subjecting at least the conditioned real test piece (1c) to the mechanical strength test, detection means (8) for detecting the break of the conditioned real test piece (1 c) subjected to the mechanical strength test;
collection means (7) for collecting the real mechanical strength values (VReal) including at least one value corresponding to a breaking value of the conditioned real test piece (1c).

12. Equipment according to claim 11, **characterized in that** the trepanning device (3) comprises a cylindrical rotating body (3a) comprising an inner cavity (3b) and a serrated edge (3c) surrounding an open base (3d) of the inner cavity(3b), the inner cavity (3b) having a height greater than the predetermined height and a diameter substantially equal to the predetermined diameter established in the predetermined dimensions (d), and
an actuation device (3e) connected to the cylindrical rotating body (3a) to confer rotational movement to the cylindrical rotating body (3a).

13. Equipment according to claim 11 or 12, **characterized in that** the calibrating device (4) comprises
a cylindrical chamber (4a) located in a container body (4b) with open opposite bases (4c), and having a diameter and a height corresponding to the predetermined diameter and to the predetermined height established in the predetermined dimensions (d), respectively;
a removal device (4d, 4e) for removing test piece material protruding from the open bases (4c) of the cylindrical chamber (4a).

14. Equipment according to claim 11, 12 or 13, **characterized in that** it further comprises a compacting device (5) for compacting the reference composition (2a) comprising
a inner cylindrical space (5) located in a guiding body (5a) between a lower closed base (5c) and an upper open base (5d) and having a diameter substantially equal to the predetermined diameter and a height greater than the predetermined height established in the predetermined dimensions (d);
a thrusting piston (5e) which can move axially in the inner space (5b) towards said closed base (5c) for compacting the reference composition (2a) when it is housed in the inner space (5b); actuating means (5f) connected to the thrusting piston (5e) to confer a predetermined axial thrust force to the thrusting piston (5e) for subjecting the reference composition (2) to at least one compaction blow.

## Patentansprüche

1. Verfahren zur Bewertung der mechanischen Eigenschaften von Sandgussformen umfassend:
Extrahieren (A) mindestens einer Probe aus einem Abschnitt einer ungehärteten Sandgussform (1), die aus einer vorbestimmten Zusammensetzung hergestellt ist, die eine Formmasse mit einem Bindungssystem umfasst, um einen extrahierten realen Prüfkörper (1a) zu erhalten;
Aushärten (B) des extrahierten realen Prüfkörpers (1a) für eine vorbestimmte Aushärtezeit (t1), um einen ausgehärteten realen Prüfkörper (1b) zu erhalten;
Konditionieren (C) des ausgehärteten realen Prüfkörpers (1b) auf vorbestimmte Abmessungen (d), die eine vorbestimmte Höhe und einen vorbestimmten Durchmesser beinhalten, um einen konditionierten realen Prüfkörper (1c) zu erhalten;
Unterziehen (D) des konditionierten realen Prüfkörpers (1c) einer mechanischen Bruchfestigkeitsprüfung unter vorbestimmten Druck- und Temperaturbedingungen (C_{P,T}), um reale mechanische Festigkeitswerte (V_{Real}) zu erhalten;
Vergleichen (E) der realen mechanischen Festigkeitswerte (V_{Real}) mit mechanischen Bezugsfestigkeitswerten (V_{Ref}), die mindestens einem konditionierten Referenzprüfkörper (2c) entsprechen, der ebenfalls im Wesentlichen die vorbestimmten Abmessungen (d) aufweist, wodurch die mechanischen Eigenschaften des konditionierten realen Prüfkörpers (1c) bewertet werden, wobei die mechanischen Bezugsfestigkeitswerte (V_{Ref}) wie folgt erhalten werden:
Verdichten (F), Anwenden vorbestimmter Verdichtungsbedingungen (C_{Comp}) einer Referenzzusammensetzung (2), die im Wesentlichen die gleiche Formmasse und im Wesentlichen das gleiche Bindungssystem wie die ungehärteten Sandgussformen (1) umfasst, um einen verdichteten Referenzprüfkörper (2a) zu erhalten;
Härten (G) des verdichteten Referenzprüfkörpers (2a) für eine Referenzhärtungszeit (t2), um einen ausgehärteten Referenzprüfkörper (2b) zu erhalten;
Konditionieren (H) des ausgehärteten Referenzprüfkörpers (2b) auf die vorbestimmten Abmessungen (d), um einen konditionierten Referenzprüfkörper (2c) zu erhalten; und Unterziehen (I) des konditionierten Referenzprüfkörpers (2c) einer mechanischen Bruchfestigkeitsprüfung unter den vorbestimmten Druck- und Temperaturbedingungen (C_{P,T}), um die mechanischen Bezugsfestigkeitswerte (V_{Ref}) zu erhalten.

2. Das Verfahren gemäß Anspruch 1, **dadurch gekennzeichnet, dass** die vorbestimme Aushärtungszeit (t1), der der extrahierte reale Prüfkörper (1a) unterzogen wurde, eine Dauer aufweist, die im Wesentlichen gleich der Referenzaushärtungszeit (t2) ist, der die verdichtete Referenzzusammensetzung (2) ausgesetzt wurde.

3. Das Verfahren gemäß Anspruch 1 oder 2, **dadurch gekennzeichnet, dass** die vorbestimmte Zusammensetzung des extrahierten realen Prüfkörpers (1) die gleiche Zusammensetzung wie die Referenzzusammensetzung (2a) ist.

4. Das Verfahren gemäß einem der vorhergehenden Ansprüche, **dadurch gekennzeichnet, dass** die mechanische Bruchfestigkeitsprüfung, der der konditionierte Referenzprüfkörper (2c) und der konditionierte reale Prüfkörper (1c) unterzogen werden, aus Druckprüfungen, Biegeprüfungen, Zugprüfungen und Kombinationen daraus ausgewählt wird.

5. Das Verfahren gemäß einem der Ansprüche 1 bis 4, **dadurch gekennzeichnet, dass** der extrahierte reale Prüfkörper (1a) aus der Sandgussform (1) unter Verwendung einer Trepaniervorrichtung (3) extrahiert wird, die so bemessen ist, dass der extrahierte reale Prüfkörper (1a) mit einer Höhe erhalten wird, die größer ist als die vorbestimmte Höhe des konditionierten realen Prüfkörpers, und dass der ausgehärtete reale Prüfkörper (1b) auf die vorbestimmte Höhe eingestellt wird, um den konditionierten realen Prüfkörper (1c) zu erhalten.

6. Das Verfahren gemäß einem der Ansprüche 1 bis 5, **dadurch gekennzeichnet, dass** die vorbestimmte Höhe des ausgehärteten realen Prüfkörpers (1b) mit einer Kalibriervorrichtung (4) eingestellt wird.

7. Das Verfahren gemäß einem der Ansprüche 1 bis 6, **dadurch gekennzeichnet, dass** die Referenzzusammensetzung (2a) in einer Verdichtungsvorrichtung (5) unter Verwendung einer vorbestimmten Anzahl von Verdichtungsschlägen und mit einer vorbestimmten Stopfintensität verdichtet wird.

8. Verfahren gemäß einem der Ansprüche 1 bis 7, **dadurch gekennzeichnet, dass** die Höhe des ausgehärteten Referenzprüfkörpers (2b) mit einer Kalibriervorrichtung (4) auf die vorbestimmte Höhe eingestellt wird.

9. Verfahren gemäß einem der Ansprüche 1 bis 8, **dadurch gekennzeichnet, dass** eine Vielzahl von extrahierten realen Prüfkörpern (1a) aus einer Vielzahl von Abschnitten (1') der Sandgussform (1) extrahiert wird.

10. Das Verfahren gemäß Anspruch 9, **dadurch gekennzeichnet, dass** im Auswertungsschritt (E) die realen mechanischen Festigkeitswerte (V_{Real}) jedes konditionierten realen Prüfkörpers (1c) mit den mechanischen Festigkeitsreferenzwerten (V_{Ref}) mindestens eines konditionierten Referenzprüfkörpers (2c) verglichen werden.

11. Vorrichtung zur Bewertung der mechanischen Eigenschaften von Sandgussformen unter Verwendung des Verfahrens gemäß einem der vorhergehenden Ansprüche, **dadurch gekennzeichnet, dass** sie
mindestens eine Trepaniervorrichtung (3), die zum Extrahieren einer realen Probe aus einem Abschnitt (1') der Sandgussform (1) und zum Erhalten des extrahierten realen Prüfkörpers (1a) ausgelegt ist;
mindestens eine Kalibriervorrichtung (4) zum Konditionieren mindestens des ausgehärteten realen Prüfkörpers (1b) auf die vorbestimmten Abmessungen (d), Entfernen von Teilen des ausgehärteten realen Prüfkörpers (1b), die die vorbestimmten Abmessungen (d) überschreiten;
wenigstens eine mechanische Festigkeitsprüfvorrichtung (6) mit Belastungsmitteln (6a, 6b) zum Unterwerfen mindestens des konditionierten realen Prüfkörpers (1c) unter die mechanische Festigkeitsprüfung, Erfassungsmittel (8) zum Erfassen des Bruchs des konditionierten realen Prüfkörpers (1c) unter die mechanische Festigkeitsprüfung; Sammelmittel (7) zum Sammeln der realen mechanischen Festigkeitswerte (VReal), die mindestens einen Wert beinhalten, der einem Bruchwert des konditionierten realen Prüfkörpers (1c) entspricht;
umfasst.

12. Vorrichtung gemäß Anspruch 11, **dadurch gekennzeichnet, dass** die Trepaniervorrichtung (3) einen zylindrischen rotierenden Körper (3a), der einen inneren Hohlraum (3b) umfasst, und gezahnte Kanten (3c) umfasst, die eine offene Basis (3d) des inneren Hohlraums (3b) umgibt, wobei der innere Hohlraum (3b) eine Höhe aufweist, die größer als die vorbestimmte Höhe ist und einen Durchmesse aufweist, der im Wesentlichen gleich dem vorbestimmten Durchmesser ist, der in den vorbestimmten Abmessungen (d) festgelegt ist, und eine Betätigungsvorrichtung (3e), die mit dem zylindrischen Drehkörper (3a) verbunden ist, um dem zylindrischen Drehkörper (3a) eine Drehbewegung zu verleihen.

13. Die Vorrichtung gemäß Anspruch 11 oder 12, **dadurch gekennzeichnet, dass** die Kalibriervorrichtung (4) eine
zylindrische Kammer (4a) umfasst, die sich in einem Behälterkörper (4b) mit offenen gegenüberliegenden Basen (4c) befindet, und
einen Durchmesser und eine Höhe aufweist, die dem vorbestimmten Durchmesser und der vorbestimmten Höhe entsprechen, die jeweils in den vorbestimmten Abmessungen (d) festgelegt sind;
eine Entnahmevorrichtung (4d, 4e) zum Entfernen von Prüfmaterial, das aus den offenen Basen (4c) der Zylinderkammer (4a) herausragt.

14. Die Vorrichtung gemäß Anspruch 11, 12 oder 13, **dadurch gekennzeichnet, dass** sie ferner eine Verdichtungsvorrichtung (5) zum Verdichten der Referenzzusammensetzung (2a) umfasst, die einen inneren zylindrischen Raum (5) umfasst, der in einem Führungskörper (5a) zwischen einer unteren geschlossenen Basis (5c) und einer oberen offenen Basis (5d) angeordnet ist, und einen Durchmesser aufweist, der im Wesentlichen gleich dem vorbestimmten Durchmesser ist und eine Höhe, die größer als die vorbestimmte Höhe ist, die in den vorbestimmten Abmessungen (d) festgelegt ist;
einen Schubkolben (5e), der sich axial im Innenraum (5b) in Richtung der geschlossenen Basis (5c) bewegen kann, um die Referenzzusammensetzung (2a) zu verdichten, wenn sie im Innenraum (5b) untergebracht ist;
Betätigungsmittel (5f), die mit dem Schubkolben (5e) verbunden sind, um dem Schubkolben (5e) eine vorbestimmte axiale Schubkraft zu verleihen, um die Referenzzusammensetzung (2) mindestens einem Verdichtungsschlag auszusetzen.

## Revendications

1. Procédé pour évaluer les propriétés mécaniques de moules en sable, qui comprend :
l'extraction (A) d'au moins un échantillon à partir d'une portion d'un moule en sable non durci (1) constitué d'une composition prédéterminée comprenant un composé de moulage comportant un système de liaison pour obtenir une éprouvette réelle extraite (1a) ;
le durcissement (B) de l'éprouvette réelle extraite (1a) pendant une durée de durcissement prédéterminée (t1) pour obtenir une éprouvette réelle durcie (1b) ;
le conditionnement (C) de l'éprouvette réelle durcie (1b) à des dimensions prédéterminées (d) comportant une hauteur prédéterminée et un diamètre prédéterminé afin d'obtenir une éprouvette réelle conditionnée (1c) ;
la soumission (D) de l'éprouvette réelle conditionnée (1c) à un essai de résistance à la rupture mécanique dans des conditions de pression et de température prédéterminées (C_{P,T}) pour obtenir des valeurs de résistance mécanique réelles (V_{Real});
la comparaison (E) des valeurs de résistance mécanique réelles (V_{Real}) à des valeurs de résistance mécanique de référence (V_{Ref}) correspondant à au moins une éprouvette de référence conditionnée (2c) ayant également sensiblement lesdites dimensions prédéterminées (d), pour ainsi évaluer les propriétés mécaniques de l'éprouvette réelle conditionnée (1c), dans lequel lesdites valeurs de résistance mécanique de référence (V_{Ref}) sont obtenues comme suit :
le compactage (F), par l'application de conditions de compactage prédéterminées (C_{Comp}), d'une composition de référence (2) comprenant sensiblement le même composé de moulage et sensiblement le même système de liaison que le moule en sable non durci (1) pour obtenir une éprouvette de référence compactée (2a) ;
le durcissement (G) de l'éprouvette de référence compactée (2a) pendant une durée de durcissement de référence (t2) pour obtenir une éprouvette de référence durcie (2b) ;
le conditionnement (H) de l'éprouvette de référence durcie (2b) auxdites dimensions prédéterminées (d) pour obtenir une éprouvette de référence conditionnée (2c) ; et
la soumission (I) de l'éprouvette de référence conditionnée (2c) à un essai de résistance à la rupture mécanique dans lesdites conditions de pression et de température prédéterminées (C_{P,T}) pour obtenir les valeurs de résistance mécanique de référence (V_{Ref}).

2. Procédé selon la revendication 1, **caractérisé en ce que** la durée de durcissement prédéterminée (t1) à laquelle l'éprouvette réelle extraite (1a) a été soumise a une durée sensiblement égale à la durée de durcissement de référence (t2) à laquelle la composition de référence compactée (2) a été soumise.

3. Procédé selon la revendication 1 ou la revendication 2, **caractérisé en ce que** la composition prédéterminée de l'éprouvette réelle extraite (1) est la même composition que la composition de référence (2a).

4. Procédé selon l'une quelconque des revendications précédentes, **caractérisé en ce que** la mise à l'essai de résistance à la rupture mécanique à laquelle l'éprouvette de référence conditionnée (2c) et l'éprouvette réelle conditionnée (1c) sont soumises est choisie parmi des essais de compression, des essais de flexion, des essais de traction, et leurs combinaisons.

5. Procédé selon l'une quelconque des revendications 1 à 4, **caractérisé en ce que** l'éprouvette réelle extraite (1a) est extraite du moule en sable (1) à l'aide d'un dispositif de trépannage (3) dimensionné pour obtenir l'éprouvette réelle extraite (1a) avec une hauteur supérieure à la hauteur prédéterminée de l'éprouvette réelle conditionnée, et **en ce que** l'éprouvette réelle durcie (1b) est ajustée à la hauteur prédéterminée pour l'obtention de l'éprouvette réelle conditionnée (1c).

6. Procédé selon l'une quelconque des revendications 1 à 5, **caractérisé en ce que** la hauteur prédéterminée de l'éprouvette réelle durcie (1b) est ajustée à l'aide d'un dispositif de calibrage (4).

7. Procédé selon l'une quelconque des revendications 1 à 6, **caractérisé en ce que** la composition de référence (2a) est compactée dans un dispositif de compactage (5) à l'aide d'un nombre prédéterminé de coups de dame et à une intensité de pilonnage prédéterminée.

8. Procédé selon l'une quelconque des revendications 1 à 7, **caractérisé en ce que** la hauteur de l'éprouvette de référence durcie (2b) est ajustée à la hauteur prédéterminée à l'aide d'un dispositif de calibrage (4).

9. Procédé selon l'une quelconque des revendications 1 à 8, **caractérisé en ce qu'**une pluralité d'éprouvettes réelles extraites (1a) est extraite à partir d'une pluralité de portions (1') du moule en sable (1).

10. Procédé selon la revendication 9, **caractérisé en ce qu'**à l'étape d'évaluation (E), les valeurs de résistance mécanique réelles (V_{Real}) de chaque éprouvette réelle conditionnée (1c) sont comparées aux valeurs de résistance mécanique de référence (V_{Ref}) d'au moins une éprouvette de référence conditionnée (2c).

11. Equipement pour évaluer les propriétés mécaniques de moules en sable à l'aide du procédé selon l'une quelconque des revendications précédentes, **caractérisé en ce qu'**il comprend au moins un dispositif de trépannage (3) conçu pour extraire l'échantillon réel d'une portion (1') du moule en sable (1) et obtenir l'éprouvette réelle extraite (1a) ;
au moins un dispositif de calibrage (4) pour conditionner au moins l'éprouvette réelle durcie (1b) aux dimensions prédéterminées (d) par l'élimination de portions de l'éprouvette réelle durcie (1b) dépassant les dimensions prédéterminées (d) ;
au moins un dispositif de mise à l'essai de résistance mécanique (6) comprenant des moyens de chargement (6a, 6b) pour soumettre au moins l'éprouvette réelle conditionnée (1c) à l'essai de résistance mécanique,
des moyens de détection (8) pour détecter la rupture de l'éprouvette réelle conditionnée (1c) soumise à l'essai de résistance mécanique ;
des moyens de collecte (7) pour collecter les valeurs de résistance mécanique réelles (V_{Real}) comportant au moins une valeur correspondant à une valeur de rupture de l'éprouvette réelle conditionnée (1c).

12. Equipement selon la revendication 11, **caractérisé en ce que** le dispositif de trépannage (3) comprend un corps rotatif cylindrique (3a) comprenant une cavité interne (3b) et un bord dentelé (3c) entourant une base ouverte (3d) de la cavité interne (3b), la cavité interne (3b) ayant une hauteur supérieure à la hauteur prédéterminée et un diamètre sensiblement égal au diamètre prédéterminé établi dans les dimensions prédéterminées (d), et
un dispositif d'actionnement (3e) raccordé au corps rotatif cylindrique (3a) pour conférer un mouvement de rotation au corps rotatif cylindrique (3a).

13. Equipement selon la revendication 11 ou 12, **caractérisé en ce que** le dispositif de calibrage (4) comprend
une chambre cylindrique (4a) située dans un corps de contenant (4b) avec des bases opposées ouvertes (4c), et ayant un diamètre et une hauteur correspondant au diamètre prédéterminé et à la hauteur prédéterminée établis dans les dimensions prédéterminées (d), respectivement ;
un dispositif d'élimination (4d, 4e) pour éliminer de la matière d'éprouvette en saillie depuis les bases ouvertes (4c) de la chambre cylindrique (4a).

14. Equipement selon la revendication 11, 12 ou 13, **caractérisé en ce qu'**il comprend en outre un dispositif de compactage (5) pour compacter la composition de référence (2a) comprenant un espace cylindrique interne (5) situé dans un corps de guidage (5a) entre une base fermée inférieure (5c) et une base ouverte supérieure (5d) et ayant un diamètre sensiblement égal au diamètre prédéterminé et une hauteur supérieure à la hauteur prédéterminée établie dans les dimensions prédéterminées (d) ;
un piston de poussée (5e) qui peut bouger axialement dans l'espace interne (5b) vers ladite base fermée (5c) pour compacter la composition de référence (2a) lorsqu'elle est logée dans l'espace interne (5b) ;
des moyens d'actionnement (5f) raccordés au piston de poussée (5e) pour conférer une force de poussée axiale prédéterminée au piston de poussée (5e) afin de soumettre la composition de référence (2) à au moins un coup de dame.
